Europäisches Patentamt

European Patent Office

Office européen des brevets

(11) Veröffentlichungsnummer: **0 025 834**
**A2**

(12) # EUROPÄISCHE PATENTANMELDUNG

(21) Anmeldenummer: **80104265.6**

(22) Anmeldetag: **19.07.80**

(51) Int. Cl.³: **F 24 J 3/02**

(30) Priorität: **25.09.79 CH 8630/79**

(43) Veröffentlichungstag der Anmeldung:
**01.04.81 Patentblatt 81/13**

(84) Benannte Vertragsstaaten:
**AT BE CH DE FR GB IT LI LU NL SE**

(71) Anmelder: **Bertrand, Reymont**
**Seefeldstrasse 194**
**CH-8008 Zürich(CH)**

(72) Erfinder: **Bertrand, Reymont**
**Seefeldstrasse 194**
**CH-8008 Zürich(CH)**

(74) Vertreter: **Blum, Rudolf E. et al,**
**c/o E. Blum & Co Patentanwälte Vorderberg 11**
**CH-8044 Zürich(CH)**

(54) **Sonnenkollektor mit einem parabolischen Reflektorelement.**

(57) Die Herstellung eines Sonnenkollektors erfolgt in der Weise, dass eine an ihrem Rand eingespannte, reflektierende Kunststoff-Membran (1) über ihre Fläche gleichmässig belastet wird. Dadurch ensteht eine angenähert parabolische Verformung der Membran (1). Die Flächenbelastung erfolgt durch Erzeugung eines Ueberdruckes in einer Kammer (6), die dadurch gebildet wird, dass eine lichtdurchlässige zweite Membran (5) über die erste Membran (1) gespannt und am Rand dicht verbunden wird. Im Fokus (7) werden die Wärme-Auswertmittel angeordnet. Die Anordnung ist zur Erhöhung des Wirkungsgrades so getroffen, dass die Krümmung der reflektierenden Membran (1) grösser ist als diejenige der lichtdurchlässigen Membran (5). Letztere kann hierzu ein Tragnetz (61) aufweisen.

Fig. 3

Fig. 5

- 1 -

## Sonnenkollektor mit einem parabolischen Reflektorelement

Die Erfindung betrifft einen Sonnenkollektor mit einem parabolischen Reflektorelement, das eine dehnbare, mit einer reflektierenden Schicht versehene Membrane aufweist, die längs ihres Randes starr gehalten ist. Insbesondere betrifft die Erfindung einen Sonnenkollektor der genannten Art, dessen reflektierende Membrane in einem Rahmen starr gehalten ist und der weiter ein der Membrane gegenüberliegendes Wandelement aufweist, welche miteinander eine druckdichte Kammer für die hohlparabolische Verformung der reflektierenden Membrane bilden, in deren Fokus Wärmeauswertungsorgane angeordnet sind.

Reflektorelemente der letztgenannten Art werden nachfolgend als pneumatische Reflektoren bezeichnet. Solche sind im Stand der Technik bereits enthalten.

Die Verbreitung von Sonnenkollektoren mit konzentrierenden Reflektoren, welche an sich sehr geeignete Einrichtungen zur Ausnützung der Sonnenenergie darstellen, wird durch die hohen Herstellungskosten dieser Einrichtungen behindert, ein Problem, das wegen der niedrigen Leistungsdichte der Sonnenenergie und den damit verbundenen Grössenanforderungen noch verschärft wird, fällt doch pro Quadratmeter Kollektorfläche durchschnittlich nur etwa 1 kW Sonnenleistung an, von welcher wiederum nur ein Teil in auswertbare Energie verwandelt werden kann.

Wie bekannt, ist zur Konzentration von Lichtstrahlen eine Sammellinse oder ein Parabolspiegel nötig. Nur diese optischen Anordnungen können die zur Erzielung eines hohen Wirkungsgrades der Umwandlung von Wärme in Verbrauchsenergie, z.B. in Form von Elektrizität oder einem energieangereicherten Gas, nötige Konzentration sicherstellen. Bereits zweidimensional-parabolische Spiegel weisen hohe Quadratmeterkosten auf, verschweige denn dreidimensionale Parabolspiegel. Wie die Erfahrung bei Radarantennen zeigt, gehen die Kosten eines Parabolspiegels von 300 m$^2$ (entsprechend einem 100 kW-Kraftwerk) in die Millionen Schweizer Franken. Aus diesen Gründen bieten die pneumatischen Reflektoren interessante Möglichkeiten. Wie aus der Spannungstheorie bekannt ist, nimmt eine elastische Membrane unter gleichmässig wirkender Druckbelastung nahezu Paraboloidform an, was es ermöglicht, auf billige Weise Sonnenkollektoren von praktisch unbegrenzter Grösse zu bilden. (Vergl. zur Theorie: Henky. H., Ueber den Spannungszustand in kreisrunden Platten mit verschwindender Biegesteifigkeit, Zeits. Math. Phys., Bd. 63, 1915).

Eine Anwendung dieses Prinzips ist in der DE-OS 26 43 539 beschrieben. Darin wird ein pneumatischer Reflektor beschrieben, der unter Druckluftbeaufschlagung sphärische (oder in speziellem Fall parabolische) Form annehmen soll und es erlaubt, die Lichtstrahlen derart zu konzentrieren, dass ein hoher Energieumwandlungswirkungsgrad ($\eta_{th}$= 0,30) bei Temperaturen von über 450$^{\circ}$C und einem Konzentrationsverhältnis von etwa 30 erzielt wird.

In einem zweiten Ausführungsbeispiel ist eine pneumatische Spiegelanordnung beschrieben, die keine exakte parabolische Form aufweist und eine geringere Konzentration bewirkt (weniger als 30), wodurch bekanntlich der Wirkungsgrad der Energieumwandlung herabgesetzt ist. Während die zweite Variante aus diesem Grund nachteilig ist, soll nachfolgend erläutert werden, weshalb auch das erstgenannte Ausführungsbeispiel in der Praxis zu keinen befriedigenden Resultaten führt.

Wie nachfolgend näher erläutert werden wird und wie sich aus der Theorie ergibt, verformt sich eine homogene, elastische, anfänglich ebene Folie, die am Rand eingespannt ist, unter gleichmässiger Druckbeaufschlagung zu parabolischer Form. Da in DE-OS 26 43 539 die Erzielung einer sphärischen Verformung angestrebt wird, muss daraus geschlossen werden, dass die Folienmembrane vor der Druckbeaufschlagung einen entsprechenden Zuschnitt aufweist. Die optischen Auswirkungen der sphärischen Spiegelform können nicht vernachlässigt werden, indem bei grossen Oeffnungswinkeln die sog. sphärische Aberration auftritt und nur im Fall eines Parabolspiegels eine bis zum Fokus gleichmässig zunehmende Konzentration stattfindet. Dies hat bei der in DE-OS 26 43 539 vorgeschlagenen ersten Ausführungsform erhebliche Bedeutung, indem die reflektierten Lichtstrahlen auf ihrem Weg zu den Wärmeauswertungsorganen nochmals eine transparente Membrane durchqueren. Bei sphärischer Ausbildung des Reflektors entsteht die Gefahr, dass durch sphärische Aberration eine Strahlenkonzentration im Bereich der transparenten Membrane auftritt, die ein Loch hineinbrennt (schon bei Temperaturen von ca. 100°C). Optische Betrachtungen ergeben, dass dies bei einem Verhältnis der Dicke zum Durchmesser des pneumatischen Reflektors (relative Dicke) von 1/4 geschehen kann, weshalb die Anordnung gemäss der genannten Publikation extrem flach ausgebildet sein muss, so dass ihre relative Dicke kleiner als 1/6 ist. Dies wiederum zieht erhebliche Nachteile mit sich, die nachfolgend erläutert werden sollen.

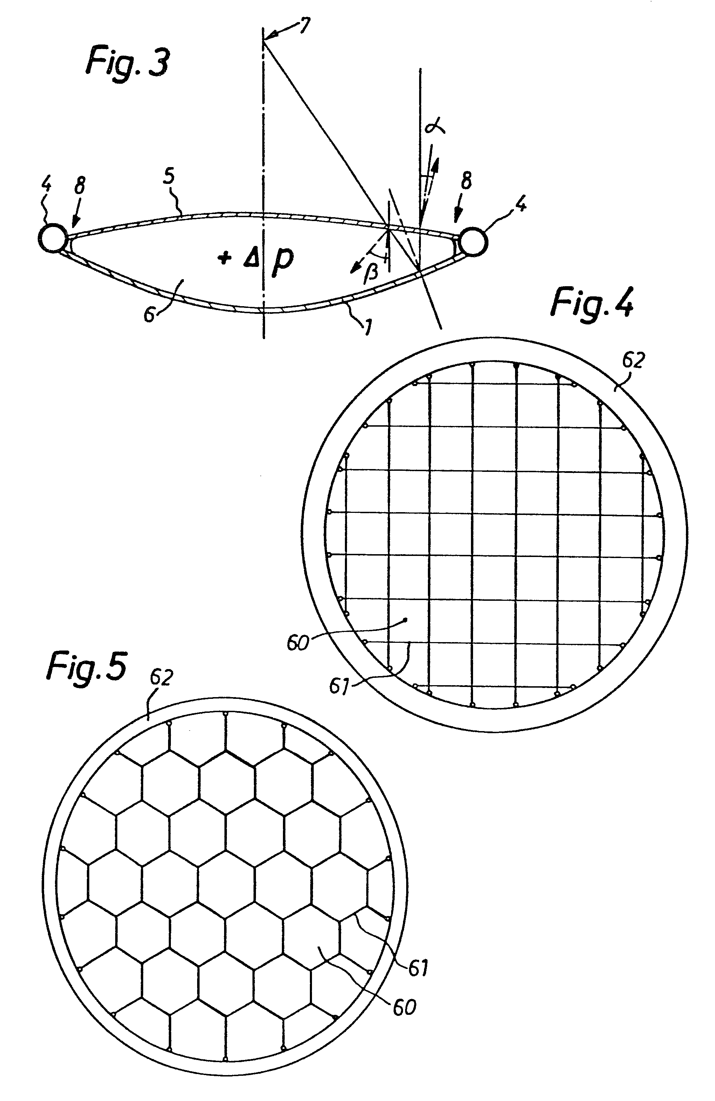

Die optischen Verluste bei einer derartigen Anordnung ergeben sich aus Reflektions- und Absorptionsverlusten beim Eintritt durch die transparente Membrane und entsprechenden Verlusten beim Wiederaustritt, wie in Fig. 3 hinten schematisch gezeigt ist. Es leuchtet ein, dass bei grösserer Krümmung der transparenten Membrane an der Peripherie die Reflektions-Verluste ansteigen. Um diese niedrig zu halten, muss die transparente Membrane eine abgeflachte Form aufweisen. Da sie ebenfalls den inneren Druck des pneumatischen Reflektors aufnehmen muss, müsste sie dazu bereits vor der Druckbeaufschlagung vorgespannt werden. Noch kritischer wird die Situation beim Wiederaustritt der Strahlen, wozu wiederum auf Fig. 3 hinten hingewiesen wird. Weil der Flächenzuwachs pro Radiuseinheit gegen die Peripherie grösser wird, ist eine grosse Krümmung der transparenten Membrane gegen den Rand nicht akzeptabel, weil sonst ein grosser Teil der aufgefangenen Strahlung in den pneumatischen Reflektor hinein gespiegelt wird und sein Inneres erwärmt (was die Gefahr der Zerstörung der Membrane erhöht).

Die zweite Art der Verluste sind Absorbtionsverluste, welche allgemein proportional zur Dicke der transparenten Membrane sind. Da die Strahlen die transparente Membrane zweimal durchlaufen, sind die Verluste proportional zum Quadrat der Dicke der Membrane. Aus diesem Grund sollte die Dicke der transparenten Membrane so klein als möglich sein. Dies wiederum steht im Widerspruch zu den Spannungsanforderungen, die an die Reflektormembranen gestellt werden, wie später erläutert wird.

Berechnungen zeigen, dass die optischen Verluste für einen pneumatischen Reflektor der beschriebenen Art mit der relativen Dicke 1/6 bei der Foliendicke 0.1 mm für parabolische Form ca. 10 % für sphärische Form ca. 15 % betragen. Bei einer Foliendicke von 1 mm steigen diese Werte auf ca. 18 % bzw. 25 % an, wobei der grössere Teil der Verluste auf die sekundäre Reflektion zurückzuführen ist. Bei pneumatischen Reflektoren der beschriebenen Art mit der relativen Dicke von 1/4 steigen die optischen Verluste auf 50 %, bei der relativen Dicke von 1/3 gar auf 95 %. Wird die relative Dicke klein gewählt, so dass die optischen Verluste akzeptabel sind, zieht dies eine grosse Brennweite und damit sehr lange Stützen für die im Brennpunkt angeordneten Wärmeauswertungsmittel nach sich, was bei grossen Reflektoren rasch an konstruktive Grenzen führt, indem z.B. bei einer 100 kW-Anlage diese Stützen ca. 16 m lang sein müssten, womit die Kostenvorteile des Reflektors wieder aufgehoben werden.

Damit stellen sich für die transparente Membrane und die reflektierende Membrane widersprechende Anforderungen.

Während die transparente Membrane aus den genannten Gründen zur Herabsetzung der optischen Verluste so dünn und zugleich so "stark" als möglich ausgebildet sein soll, damit sie unter der Druckbeaufschlagung keine zu starke Wölbung annimmt, soll die reflektierende Membrane so dünn als möglich sein, um eine starke Krümmung unter derselben Druckbeaufschlagung zu erhalten, so dass die Brennweite reduziert wird. Andererseits wäre es wegen der Gefahr von Deformationen erwünscht, dass der Innendruck möglichst hoch ist, was wiederum eine grössere Membrandicke erfordern würde. Insgesamt stellen sich bei der Realisierung eines symmetrisch aufgebauten pneumatischen Reflektors der bekannten Art viele sich widersprechende Probleme.

In der DE-OS 27 48 645 ist ferner ein flugfähiger, symmetrischer, pneumatischer Reflektor gezeigt, wobei eine Spiegelfläche durch eine hinter ihr liegende Unterdruckkammer gebildet wird. Dabei wird eine Brennweite vorausgesetzt, die für realistische Anwendungen nicht akzeptabel ist. Zur Erzielung kleinerer Brennweiten stellen sich mit den oben diskutierten Problemen vergleichbare prinzipielle Schwierigkeiten, die hier im einzelnen nicht mehr erläutert werden.

Es stellt sich demnach die Aufgabe, Reflektoranordnungen der eingangs genannten Art anzugeben, bei denen auch bei grossflächiger Ausführung diese Probleme nicht auftreten. Dies wird erfindungsgemäss durch die Merkmale gemäss Anspruch 1 und Anspruch 28 gelöst.

Nachfolgend werden anhand von Zeichnungen Ausführungsbeispiele der Erfindung näher erläutert. Dazu zeigen:

Fig. 1 eine schematische Darstellung der parabolischen Deformation einer eingespannten Membrane unter gleichmässiger Flächen-Belastung;

Fig. 2 ein Schema zur Erläuterung der in den mathematischen Formeln auftretenden Grössen;

Fig. 3 eine schematische Darstellung der auftretenden Reflektionen;

Fig. 4-11 Aufsichten auf verschiedene Ausführungen von Membranen mit netzartiger Struktur;

Fig. 12 eine schematische Schnittansicht eines Kollektors mit aufgeblasener, bohnenförmiger Kammer und innerhalb der Kammer befindlichem Fokus;

Fig. 13 eine schematische Schnittansicht eines Kollektors mit aufgeblasener, linsenförmiger Kammer und innerhalb der Kammer befindlichem Fokus;

Fig. 14 eine schematische Schnittansicht einer anderen Ausführungsform eines Kollektors gemäss Fig. 13;

Fig. 15 eine schematische Schnittansicht einer weiteren Ausführungsform eines Kollektors gemäss Fig. 13;

Fig. 16 eine schematische Schnittansicht eines Kollektors mit Vakuumkammer zur Bildung der parabolischen Kollektorform;

Fig. 17 und 17A Darstellungen einer ersten Ausführungsform eines Kollektors mit Vakuumkammer;

Fig. 18 eine perspektivische Darstellung des Kollektors nach Fig. 17;

Fig. 19 eine zweite Ausführungsform eines Kollektors mit Vakuumkammer;

Fig. 20 eine perspektivische Darstellung eines parabolischen, trogartigen Kollektors, mit aufgeblasener länglicher Kammer;

Fig. 21 eine perspektivische Darstellung eines parabolischen, trogartigen Kollektors mit länglicher Vakuum-Kammer;

Fig. 22 einen grossflächigen Sonnenkollektor in perspektivischer Ansicht, mit Teleskopstützen;

Fig. 23 einen grossflächigen Sonnenkollektor in perspektivischer Ansicht, der an längenveränderlichen Kabeln aufgehängt ist;

Fig. 24 einen grossflächigen Sonnenkollektor in perspektivischer Ansicht, der entlang einer Kreisbahn fahrbar und dessen Neigung veränderlich ist;

Fig. 25 eine Seitenansicht des grossflächigen Sonnenkollektors gemäss Fig. 8, dessen Kammer mit einem Gas leichter als Luft gefüllt ist;

Fig. 26 eine schematische Darstellung einer Sonnenenergie-Anlage mit Dampferzeuger, Turbine und Generator;

Fig. 27 eine schematische Darstellung einer Sonnenenergie-Anlage mit einer Gasumwandlungsanlage zur Erzeugung eines energiereicheren Gasgemisches;

Fig. 28 eine Draufsicht auf einen Kollektor, der von einem sternförmigen Rahmen und Abspann-Kabeln getragen ist;

Fig. 29 einen Vertikalschnitt durch den Kollektor gemäss Fig. 14;

Fig. 30,31 eine weitere Ausführung eines grossflächigen Kollektors in Schnittansicht und perspektivischer Darstellung.

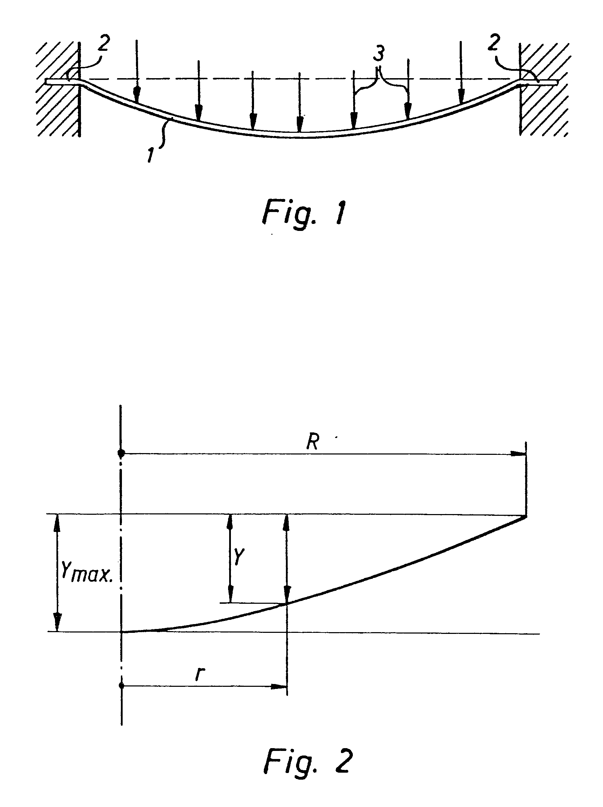

Die Herstellung des erfindungsgemässen parabolischen Sonnenkollektors beruht auf der Erkenntnis, dass eine parabolische Form erhalten wird, wenn eine am Rand festgehaltene Membrane über ihre Fläche gleichförmig belastet wird, wie dies schematisch aus Fig. 1 hervorgeht. Dort ist die Membrane 1 am Rand durch Einspannstellen 2 festgehalten und wird durch senkrecht wirkende Kräfte 3 belastet.

Die mathematische Analyse zeigt, dass die flexible Deformation einer solchen Membrane sehr nahe an ein Paraboloid herankommt. Die entsprechende Formel ist folgende (siehe Fig. 2):

$$Y = Y_{max} \; (1 - 0,9 \, \frac{r^2}{R^2} - 0,1 \, \frac{r^5}{R^5})$$

In dieser Formel ist:

Y = die Durchbiegung der Membrane an einer Stelle mit dem Radius r

$Y_{max}$ = die maximale Durchbiegung der Membrane unter Belastung im geometrischen Zentrum

R = Radius der Membrane

Diese Formel bezieht sich auf ein Rotationsparaboloid. Ein Rotationsparaboloid hat die Eigenschaft, dass parallel einfallende Lichtstrahlen von einem solchen Gebilde auf einen einzigen Punkt, den sogenannten Fokus, zurückgeworfen und somit die Wärme an dieser Stelle konzentriert wird. Das dritte Glied im Klammerausdruck weicht von der genauen parabolischen Form etwas ab und sollte daher möglichst klein gehalten werden. Dies kann auf verschiedene Weise erfolgen. Einmal indem die gleichmässige, über die ganze Membranfläche wirkende Kraft nicht normal zur Membranebene wirkt, sondern normal zu jedem einzelnen Punkt der bereits deformierten Membrane. Dadurch ergibt sich eine Verringerung des dritten Klammergliedes der erwähnten Formel um etwa 40%. Ausserdem kann durch ungleiche Dicke der Membrane diese Abweichung von der theoretischen Paraboloidform ganz eliminiert werden. Somit ist es möglich durch relativ geringfügige Modifikationen eine perfekte parabolische Form für einen Hohlreflektor zu erhalten, wenn die der Sonne zugewandte Seite strahlenreflektierend metallisiert oder mit einer Reflektor-Folie, z.B. aus Aluminium, bedeckt wird.

Andererseits ist es zur Auswertung der Wärmeenergie der Sonnenstrahlen gar nicht erwünscht, dass die Energie genau punktförmig konzentriert wird, da die auftretende Temperatur viel zu hoch wird. Anzustreben ist eine Kollektorform bei der die Konzentration der Strahlen über einen gewissen Abstandsbereich von der Kollektorfläche einigermassen konstant bleibt. Dies lässt sich durch Variation der Foliendicke vom Zentrum zur Peripherie erreichen.

Die Flächenbelastung einer Membrane zur Erzeugung der Paraboloidform lässt sich auf folgende Weise erreichen: Wenn über eine eingespannte, reflektierende Folie 1 eine zweite lichtdurchlässige Folie 5 gespannt wird und in die dadurch gebildete Kammer 6 Luft oder ein anderes Gas eingepumpt wird, dann entsteht ein linsenförmiger Kollektor, der die Form eines Rotationsparaboloides annimmt, wie dies aus Fig. 3 ersichtlich ist. Bei einem solchen Kollektor ist die auf der Oberseite mit einer reflektierenden Schicht versehene Folie 1 von einem starren Ring 4 oder Torus, beispielsweise aus Metallrohr, an der Einspannstelle 8 ringsherum festgehalten. Die von der Sonne einfallenden Lichtstrahlen 9 werden im Fokus 7 konzentriert. Die parabolische Wölbung der Folie 1 muss so gewählt werden, dass der Fokus 7 von der lichtdurchlässigen Folie 5 entfernt ist, um Schädigungen dieser Folie 5 durch Wärmeeinwirkungen der von der Folie 5 reflektierten Strahlen zu vermeiden. Um die optischen Verluste an der lichtdurchlässigen Folie 5 gering zu halten, welche durch die Reflexion der einfallenden und der gespiegelten Lichtstrahlen an der Folienoberfläche entstehen können, ist es notwendig, die Wölbung der Folie 5 möglichst klein zu halten, damit sich beim Eintritt der Lichtstrahlen und deren Wiederaustritt Winkel $\alpha$ und $\beta$ ergeben, die möglichst klein sind, wie oben erläutert wurde. Andererseits soll die Wölbung der reflektierenden Folie gross sein, wie ebenfalls erklärt.

Die Membrantheorie zeigt nun, dass der Faktor, welcher die Konstruktion eines Membran-Spiegels vorwiegend beeinflusst, nicht die Festigkeit eines speziellen Membranmaterials sondern das materialabhängige Verhältnis $\mathcal{H}$ der zulässigen Spannung $\sigma_{zul.}$ zum Elastizitätsmodul ist, wobei gilt:

$$\mathcal{H} = \frac{\sigma_{zul.}}{E} = \frac{\sigma_{BRUCH}}{1.5} \cdot \frac{1}{E}$$

wobei $\qquad \sigma_{zul} = \dfrac{\sigma_{BRUCH}}{1.5} \qquad$ und $\qquad \sigma_{BRUCH}$: die Bruchspannung bezeichnet. Der Faktor 1.5 ist der Sicherheitsfaktor für nicht-personentragende Strukturen.

Die relative Tiefe eines Reflektors, wie er in Fig. 3 dargestellt ist, ist durch $\dfrac{F}{Ymax}$ definiert, wobei F die Brennweite der quadratischen Parabel und Ymax die maximale Auslenkung im Zentrum der Parabel darstellt. Aus der Spannungstheorie lässt sich der Zusammenhang von relativer Tiefe und dem Faktor $\mathcal{H}$ wie folgt bestimmen:

$$\frac{F}{Ymax} = \frac{A}{\mathcal{H}} \qquad$$

wobei A eine dimensionslose Proportionalitätskonstante ist, die den Wert 0.2413 hat. Daraus ergibt sich, dass für "flache" Reflektoren ($\dfrac{F}{Ymax}$ gross) ein kleiner Faktor $\mathcal{H}$, für "tiefe" Reflektoren ($\dfrac{F}{Ymax} \to 1$) ein grösserer Faktor erforderlich ist, was die entsprechende Materialwahl nach sich zieht. Die Bedeutung des Faktors $\mathcal{H}$ liegt darin, dass jedes Membranmaterial mit

bestimmtem Wert von $\mathfrak{X}$ einen Reflektor einer entsprechenden relativen Tiefe ergibt, wenn die Maximalspannung, die darin auftritt, auf $\sigma_{zul}$ festgesetzt wird. Mit Hilfe einer sich ebenfalls aus der Spannungstheorie ergebenden Beziehung, kann der Betriebsdruck, welcher diesem Spannungszustand entspricht und die genannte relative Tiefe ergibt, ermittelt werden. Bei diesem Betriebsdruck hat die Membrane die maximal zulässige Tiefe. Der Betriebsdruck ist natürlich von der Membrandicke abhängig.

Mit Hilfe der erläuterten Zusammenhänge wurde die Biegung pneumatischer Spiegel in Abhängigkeit des Faktors $\mathfrak{X}$ für verschiedene, erhältliche Materialien untersucht. Dabei hat es sich gezeigt, dass mit homogenen, transparenten Kunststoffen, wie Akrylkunststoffen (ABC) oder PC-Polykarbonaten nur sehr flache Spiegel gebaut werden können, indem nur relative Dicken $\dfrac{F}{y_{max}}$ von minimal 8.1 bzw. 7 erzielt werden können.

Um einen pneumatischen Reflektor mit unterschiedlich stark gekrümmten Membranen 1 und 5 zu erzeugen (Fig. 3), müssen für diese unterschiedliche Materialien verwendet werden. Das Material der transparenten Membran 5 muss dabei einen kleinstmöglichen Faktor $\mathfrak{X} = \dfrac{\sigma_{zul}}{E}$ haben, während das Material der reflektierenden Membrane 1 einen grösstmöglichen Faktor $\mathfrak{X}$ aufweisen soll. Wie bereits erwähnt, lassen sich die Anforderungen an die transparente Membrane mit homogenen Folien nicht erreichen. Hierzu ist es notwendig, eine Membrane die nachfolgend Netzmembrane genannt wird, zu verwenden. In den Figuren 4 bis 11 sind verschiedene, anwendbare Netzanordnungen dargestellt. Die Netzmembrane besteht aus einer transparenten druckdichten Kunststofffolie 60 und einem tragenden Netz 61, die am Rand in einem Rahmen 62 gehalten sind. Das tragende Netz 61 besteht aus einem Material, das einen sehr hohen Faktor aufweist, wie z.B. E-Glasfasern (vergl. DIN 1259, Blatt 1).

Für die reflektierende Membrane 1 ist es für kleinere Durchmesser (bei Anlagen für unter 100 kW-Leistung) nicht erforderlich, ein tragendes Netz 61 anzuordnen. Es wird in diesem Fall ein Weich-Vinylkunststoff oder Gummi für die reflektierende Membrane 1 verwendet.

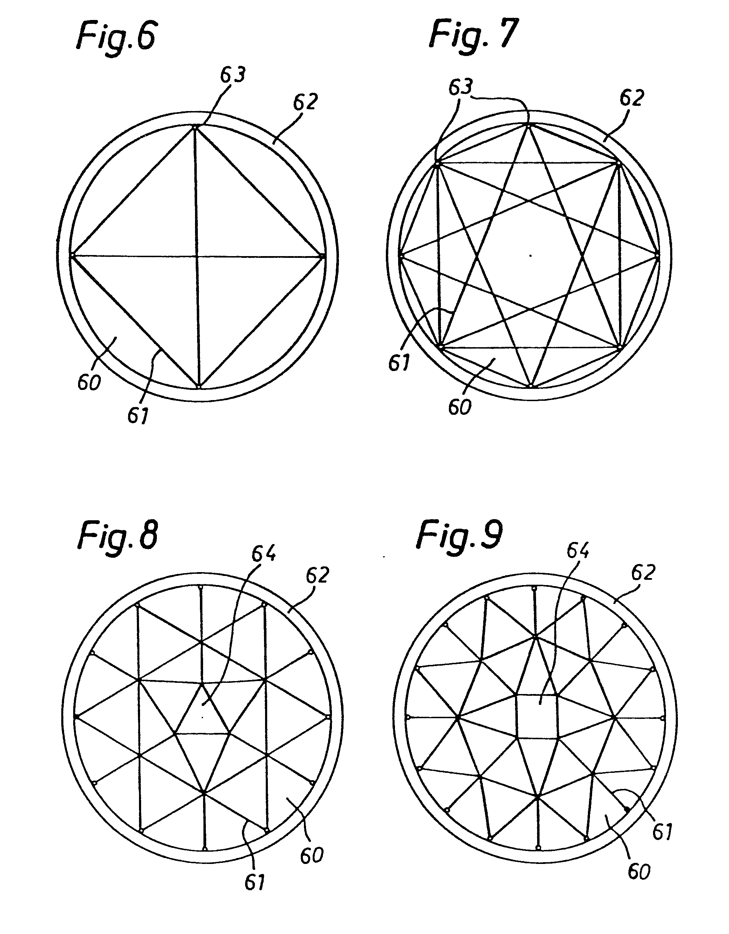

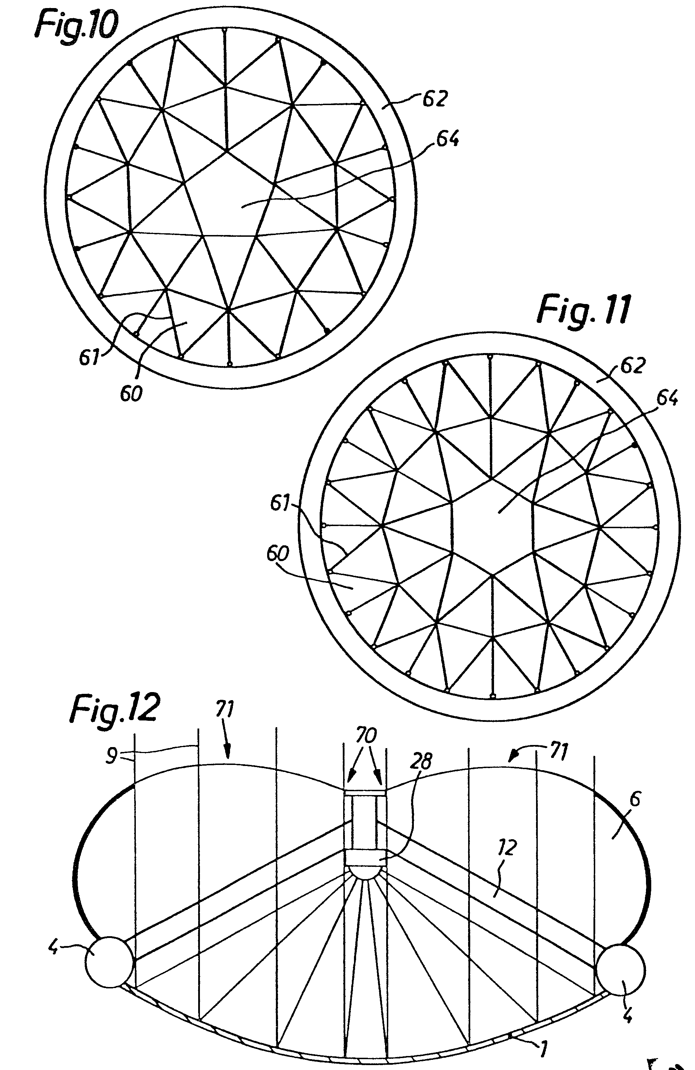

Da die einzelnen Maschen Zugkräfte in allen Richtungen in der Membranfläche aufnehmen müssen, sind die Maschenformen entsprechend auszubilden. In den Figuren 4 und 5 ist das Netz aus einer Vielzahl gleichartiger quadratischer bzw. hexagonaler Maschen aufgebaut. In den Figuren 6 und 7 sind Ausführungen gezeigt, bei welchen die Netzfäden strahlenförmig zwischen Befestigungsstellen 63 am Rahmen 62 verlaufen. Eine bevorzugte Ausführung ist schliesslich aus den Figuren 8 bis 11 ersichtlich. Darin sind alle Maschen, bis auf eine zentrale Masche 64, in Dreiecksform ausgebildet. Die zentrale Masche 64 kann seinerseits dreiecksförmig (Fig. 8), aber auch quadratisch (Fig. 9), pentagonal (Fig. 10) oder hexagonal (Fig. 11) sein, wobei an ihre Seiten die dreiecksförmige Maschenstruktur anschliesst. Mittels diesen Tragnetzanordnungen können die sich bei verschiedenen Kollektorgrössen stellenden Anforderungen erfüllt werden.

Es ist vorstehend dargetan worden, dass es vor allem die Sekundärreflektion der aus dem Reflektorelement austretenden Strahlen ist, welche zu grossen Verlusten führt. Die erfindungsgemässe Lösung erlaubt es, Kollektoren so auszugestalten, dass dieses Problem vermieden wird, indem die Wärmeauswertungsorgane in der Kammer 6 angeordnet sind.

Anhand der Fig. 12 bis 15 sollen entsprechende Ausführungsbeispiele erläutert werden.

In Fig. 12 ist ein Kollektor gezeigt, bei dem der Reflektor 1 die Form eines Rotationsparaboloids hat und am Rand von einem starren Torus 4 gehalten ist. Die transparente Membrane 5 ist wulstförmig um eine zentrale Befestigungsstelle 70 angeordnet. Die Membrane 5 ist derart ausgestaltet, dass ihre in der Lichteinfallszone liegenden Bereiche 71 gegen die einfallenden Lichtstrahlen 9 eine vom rechten Winkel nur gering abweichende Neigung besitzen. Auf radial verlaufenden Streben 12 sind im Fokus Wärmeauswertungsorgane 28 angeordnet, wobei die zentrale Befestigungsstelle 70 von diesen bzw. den Streben 12 getragen sind. Die Streben 12 verlaufen innerhalb der Druckkammer 6 zum Torus 4 und sind auf diesem abgestützt.

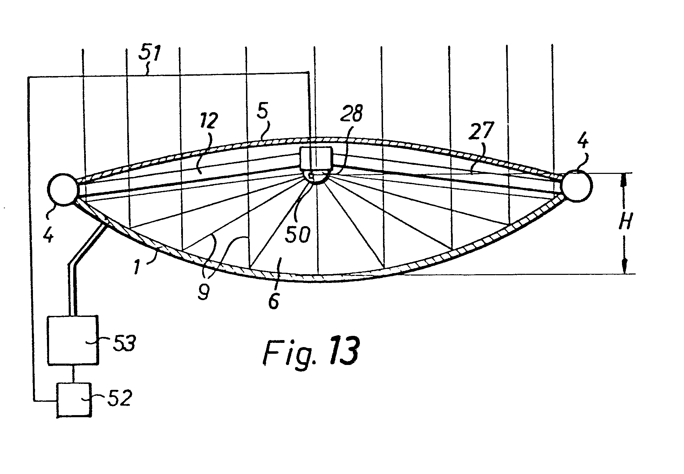

In Fig. 13 ist eine Anordnung gezeigt, bei welcher die relative Tiefe $\frac{F}{Ymax}$ einen kleineren Wert aufweist, so dass der Fokus näher bei der reflektierenden Membrane 1 liegt. Dadurch ist es möglich, die transparente Membrane 5 mit flacher Wölbung auszugestalten, was durch die oben beschriebene Ausbildung der transparenten Membrane ermöglicht wird, und womit die Reflektionsverluste an der transparenten Membrane klein gehalten werden.

Im Bereich des Fokus befindet sich ein Wärmefühler 50, der über eine Steuerleitung 53 mit einer automatisch arbeitenden Steuereinrichtung 52 verbunden ist. Diese wirkt mit einer Vorrichtung 53 zusammen, mit der eine Erhöhung oder Verminderung des Druckes im Innern der Kammer 6 erreicht werden kann. Dadurch wird der Abstand $F$ des Fokus relativ zur Kollektorfläche verändert, wenn beispielsweise eine zu hohe Temperatur am Wäremfühler 50 festgestellt wird.

Eine solche Anordnung ist vorzugsweise in sämtlichen Ausführungsbeispielen gemäss Fig. 12 - 15 angebracht, ist aber nur in Fig. 13 zeichnerisch dargestellt.

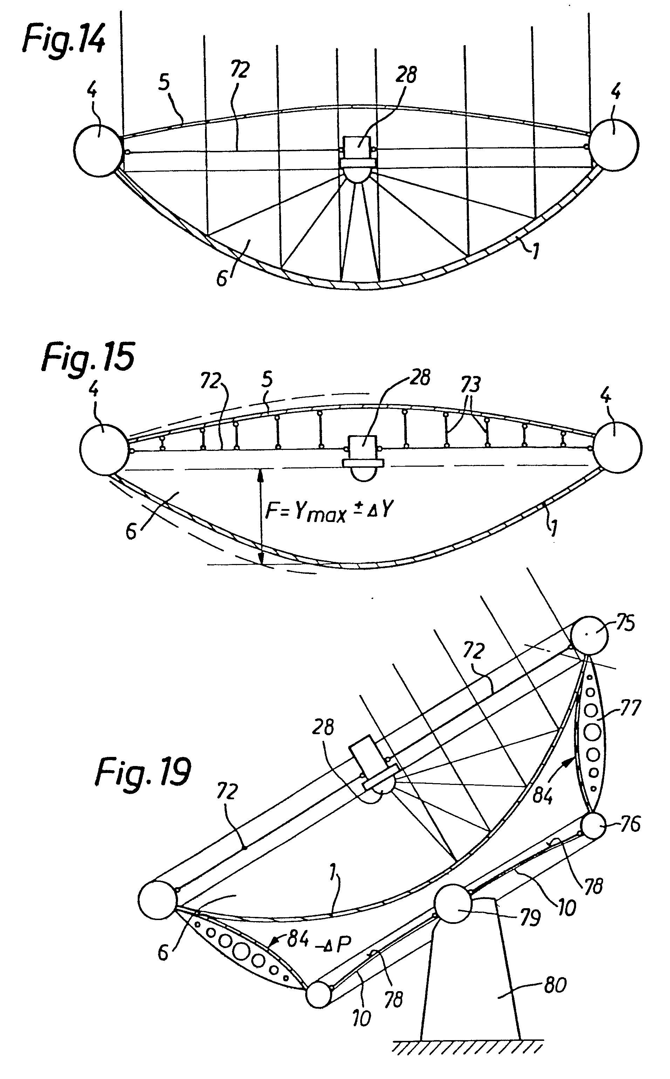

Fig. 14 zeigt einen weiteren Kollektor mit innerhalb der Kammer 6 liegenden Wärmeauswertungsorganen 28. Bei dieser Ausführung wird für die reflektierende Membrane ein sehr stark dehnbares Material, wie z.B. Vinyl (oder Gummi) verwendet, so dass die maximale Auslenkung Ymax der Membrane 1 gleich der Brennweite wird. Dies ist dann der Fall, wenn

$$\frac{F}{Ymax} = \frac{0.2413}{\partial e} = 1 \quad \text{d.h.}$$

$$\mathcal{X} = 0.2413$$

Es ist also ein Material zu wählen, dessen $\mathcal{X} = \dfrac{\sigma_{zul}}{E}$ einen Wert im angegebenen Bereich hat. Diese Ausgestaltung erlaubt es, anstelle starrer Streben 12 Spannkabel 72, z.B. Stahlkabel, zur Befestigung der Wärmeauswertungsorgane 28 im Zentrum des Torus 4 zu verwenden, was die Konstruktion leichter und kostengünstiger macht.

In Fig. 15 ist schliesslich eine weitere, vorteilhafte Ausgestaltung der zuletzt erläuterten Anordnung dargestellt. Dabei sind die Spannkabel 72 mittels Zuggliedern 73 mit dem Tragnetz in der transparenten Membrane 5 verbunden. Dies erlaubt eine sehr einfache und wirksame Steuerung des Fokus bezüglich der Wärmeauswertungsmittel 28, indem der Druck in der Kammer 6 verändert wird. Bei einer Druckzunahme wird die reflektierende Membrane 1 stärker ausgewölbt und der Brennpunkt wandert um $\Delta$y nach unten. Gleichzeitig erfolgt auch eine etwas stärkere Auswölbung der transparenten Membrane 5, wie dies strichliniert dargestellt ist, so dass sich die Wärmeauswertungsorgane 28 nach oben verschieben. Diese gegenläufigen Bewegungen bewirken, dass die Steuerung auf Druckveränderungen sehr empfindlich reagiert, bzw. kleine Druckänderungen ausreichen, um die Wärmeauswertung zu steuern. Dies ist insbesondere bei grossflächigen Hochleistungsreflektoren von Bedeutung, für welche die Einhaltung eines exakten Konzentrationsverhältnisses wichtig ist. Ferner ist diese pneumatische Steuerung weniger aufwendig als mechanische Anordnungen.

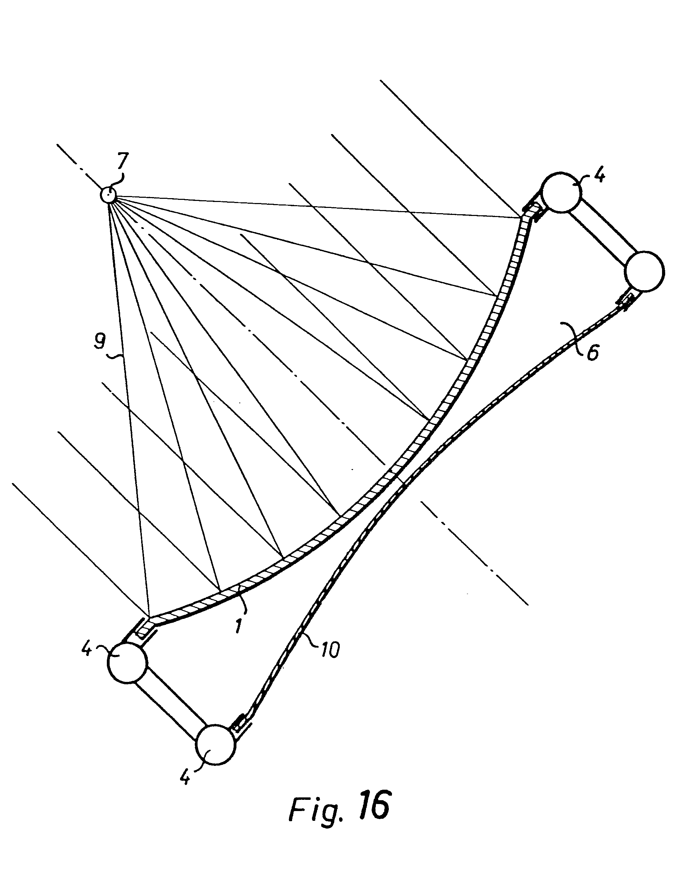

Aus Fig. 16 geht schematisch eine weitere Ausführungsform eines Hohlreflektors hervor. Anstelle einer Kammer mit Ueberdruck ist hier auf der gegenüberliegenden Membranseite eine Kammer 6 mit Unterdruck vorhanden. Die oben mit einer reflektierenden Schicht versehene Membrane 1 wird ringsherum von einem starren Rahmen 4 oder Gehäuse gehalten. Auf der der reflektierenden Schicht abliegenden Seite befindet sich eine weitere Membrane 10, welche ebenfalls vom Rahmen 4 getragen ist. In der Kammer 6 wird nun ein Unterdruck erzeugt, wodurch sich beide Folien 1,10 parabolisch verformen. Im Gegensatz zu den Ausführungsformen nach den Fig. 12 - 15 braucht hier die rückseitige Folie 10 nicht lichtdurchlässig zu sein. Sie könnte auch durch einen starren Boden ersetzt werden. Diese Ausführungsform hat den Vorteil kleiner optischer Verluste, da die Strahlen auf ihrem Weg zum Fokus keine Membrane durchqueren.

Um die Brennweite klein zu halten, muss die reflektierende Membrane 1 eine relativ grosse Krümmung annehmen. Die Anforderungen an die rückseitige Membrane weichen davon ab, indem dort eine möglichst geringe Wölbung auftreten soll, um den Kollektor möglichst dünn zu halten. Dies ist einerseits vorteilhaft, weil die abzudichtende Kammeroberfläche klein gehalten und die Konstruktion leichter ausgebildet werden kann. Ferner bietet ein flacher Kollektor kleinere Angriffsflächen für den Winddruck.

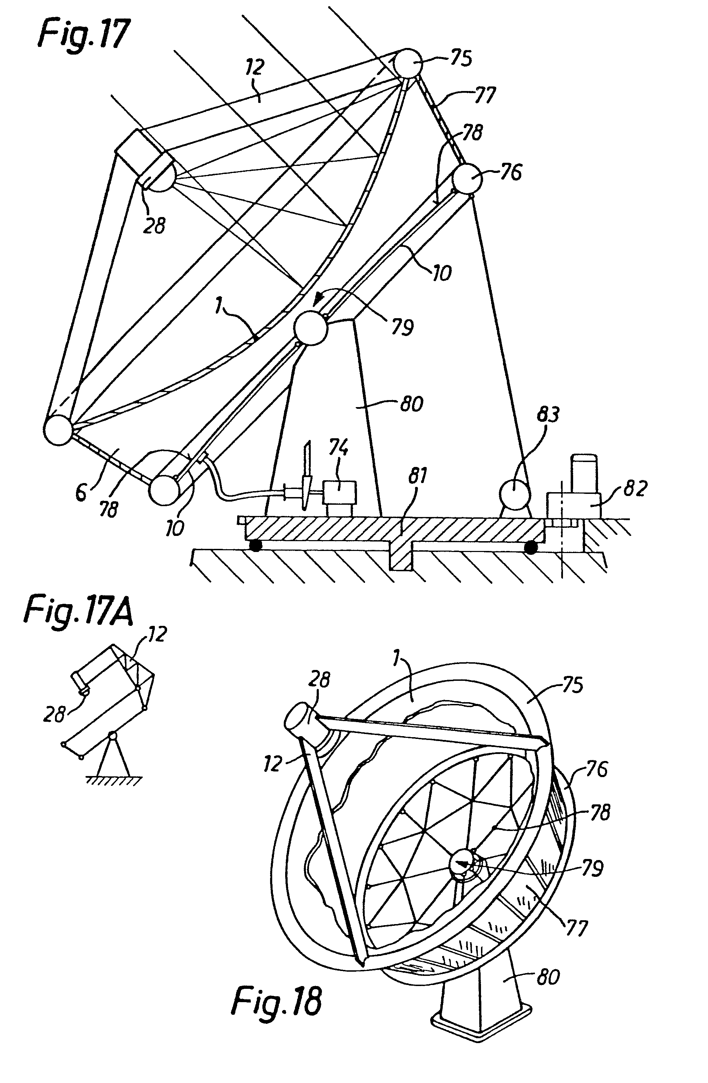

In den Fig. 17 - 19 sind nun derart ausgebildete Kollektoren detailliert dargestellt.

Fig. 17 und 18 zeigen einen stark gewölbten, parabolischen Reflektor, wobei die reflektierende Membrane 1 vom Atmosphärendruck verformt wird. In der Kammer 6 wird mittels einer Vakuumpumpe 74 ein Unterdruck $-\Delta p$ erzeugt und stabil gehalten. Der Reflektor ist aus hohlen Toruskörpern 75,76 aufgebaut, wobei der Durchmesser des oberen Toruskörpers 75 grösser ist, als derjenige des unteren. Die beiden Toruskörper sind an der Peripherie mit einer druckdichten Aussenhaut, deren Ausbildung aus dem Flugzeugbau übernommen ist, verbunden. Diese Aussenhaut muss einen geringen Aussendruck (ca. 5 % des Atmosphärendrucks) aufnehmen können. Die Wärmeauswertungsorgane 28 sind mittels Streben 12 radial gegen den oberen Toruskörper 75 (Fig. 17) oder aber seitlich auf beiden Toruskörpern 75,76 abgestützt (Fig. 17A).

Am rückseitigen Teil des Reflektors verlaufen Tragkabel 78 netzartig innerhalb des unteren Toruskörpers 76 und sind in der Mitte an einem mindestens in einem Freiheitsgrad schwenkbaren, kugelförmigen Element eines Traglagers 79 verbunden, das auf einer Stütze 80 angeordnet ist. Die Stütze 80 ist ihrerseits auf einer mittels eines Antriebsmotors 28 drehbaren Plattform 81 angeordnet, deren Stellung dem Sonnenstand (Azimuth) fortlaufend folgt. Mittels einer Winde 83 auf der Plattform kann die Elevation des Kollektors gesteuert werden.

Ausserhalb der Tragkabel 78 ist rückseitig eine druckdichte Kunststoffmembrane 10 angeordnet, welche die Unterdruckkammer 6 unten abschliesst.

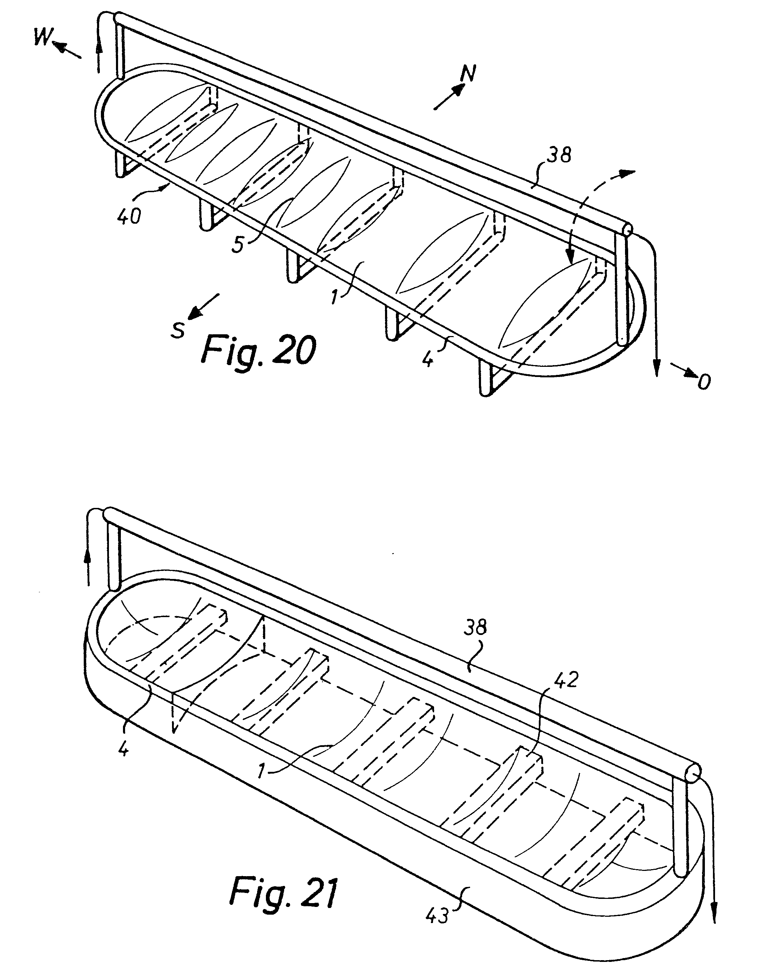

In Fig. 19 ist eine weitere Ausgestaltung eines Unterdruckreflektors gezeigt, wobei entsprechend Fig. 14 die Wärmeauswertungsmittel an Spannkabeln 72 im Zentrum des Toruskörpers 75 aufgehängt sind. Die reflektierende Membrane 1 ist an der Peripherie mit dem oberen Toruskörper 75 verbunden und erzeugt eine Brennweite, die einem Viertel des Reflektordurchmessers, bzw. ihrer maximalen Auslenkung Ymax entspricht. Hierzu muss das Membranmaterial wiederum die Bedingung $\varkappa = 0.2413$ erfüllen, was mit Vinyl oder Gummi erreicht wird. Die Membrane kann dabei homogen oder in zusammengesetzter Struktur aufgebaut sein. Rückseitig sind innerhalb des unteren Toruskörpers 76 netzartig Tragkabel 78 angeordnet, die in der Mitte an einem in mindestens einem Freiheitsgrad schwenkbaren Teil eines Traglagers 79 angebracht sind. Die beiden Toruskörper 75,76 sind mittels einer Leichtbaustruktur 77 miteinander verbunden, welche eine Aluminiumhaut 84 tragen, welche die Kammer 6 seitlich druckdicht abschliesst. Die rückseitige Abdichtung der Kammer wird durch eine ausserhalb der Tragkabel angeordnete Kunststoffolie sichergestellt. Die ganze Kollektoranordnung ist wiederum auf einer Stütze 80 gelagert und in ähnlicher Weise schwenkbar, wie in Fig. 17 dargestellt.

Anstelle der bisher dargestellten pneumatischen Reflektoren in Form von Rotationsparaboloiden, kann der Kollektor auch als parabolischer Teilzylinder ausgestaltet sein, wie in den Fig. 20 und 21 gezeigt. Der ebenfalls von einer Membran 1 gebildete Spiegel hat hier eine längliche trogähnliche Gestalt und wird von einem starren Rahmen 4 gehalten. Die fokusierten Strahlen treffen dabei auf ein entlang der Fokuslinie angeordnetes, parallel zur Troglängsachse verlaufendes Rohr 38, dessen Inhalt erwärmt wird. Bei der Ausführungsform nach Fig. 20 ist eine längliche, mit einer lichtdurchlässigen Folie überdeckte Kammer mit Ueberdruck vorhanden, die nach dem gleichen Prinzip gebaut ist wie die Ausführungsform nach Fig. 3.

Bei der Ausführungsform nach Fig. 21 ist eine Unterdruckkammer vorgesehen, entsprechend der Ausführungsform nach Fig. 16. Der Rahmen 43 wird hier durch Querstreben 42 zusätzlich gestützt. Auch diese trogähnlichen Kollektoren sollen dem Sonnenstand durch geeignete Organe nachgeführt werden.

Da die Ausführungen nach den Fig. 20 und 21 bei grossflächigen Konfigurationen nur mit Aufwand dem Sonnenstand nachgeführt werden können, werden sie vorzugsweise in Ost-West-Richtung aufgestellt. Dabei wird zwar in den Morgen- und Abendstunden eine Verringerung der Energieausnutzung in Kauf genommen, welche jedoch durch die Grösse der Anordnung kompensiert wird. Da der Azimutwinkel während des Tages konstant bleibt, muss vorzugsweise die Lage der Kollektoren nur wöchentlich nachgestellt werden. Dies kann durch Aenderung ihrer Neigung um die Längsachse oder aber durch das Verschwenken des Rohrs 38 erfolgen.

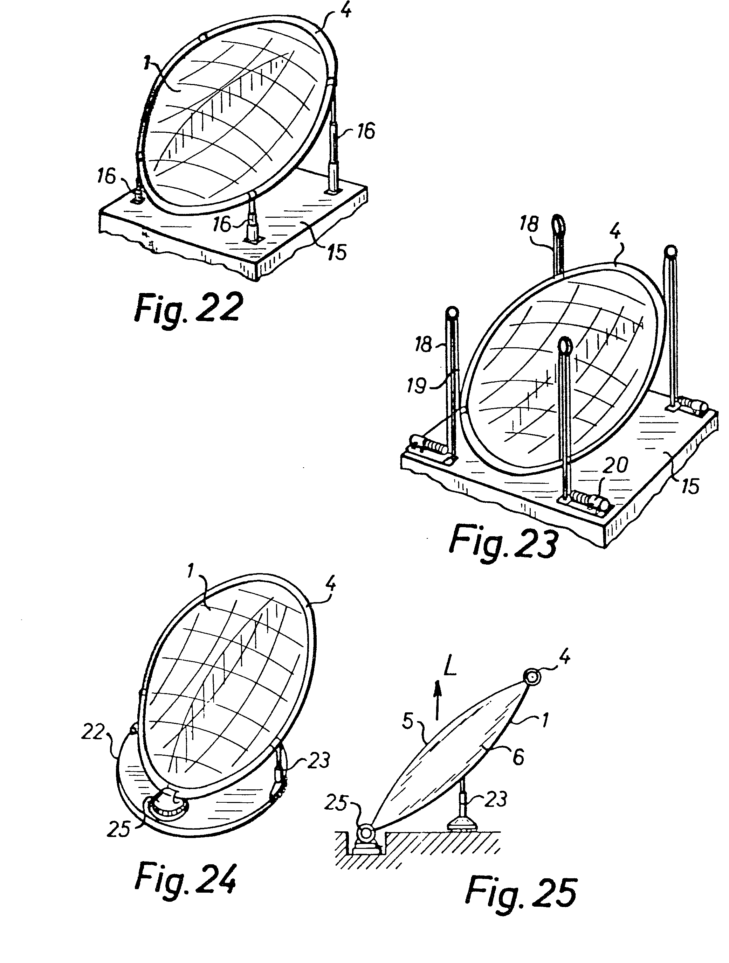

Nachfolgend sollen anhand der Fig. 22 bis 25 weitere Montagevarianten von Kollektoren der beschriebenen Art dargestellt werden.

In Fig. 22 ist ein grossflächiger Kollektor gezeigt, bei welchem der Rahmen 4 durch höhenveränderliche Teleskopsäulen 16 abgestützt ist. Diese sitzen auf einer Plattform 15 und können durch eine Steuereinrichtung hydraulisch derart in ihrer Lage verändert werden, dass der Kollektor während einem bestimmten Zeitraum genau dem Sonnenstand folgt. In Fig. 23 ist eine weitere Ausführungsvariante dargestellt, bei welcher der Kollektor an Kabeln 19 aufgehängt ist, die über vier Vertikalstützen 18 geführt und mittels Winden 20 oder dergleichen der Sonne nachgeführt werden. Sowohl die Ausführungsform nach Fig.22 als auch diejenige nach Fig. 23 können auch mit drei statt vier Stützen ausgeführt werden.

Bei der Ausführungsform nach den Fig.24 und 25 ist der Kollektor in einem drehbaren Gelenklager 25 abgestützt und kann durch längenveränderliche, auf einer ellipsenförmigen Bahn 22 bewegliche Stützen 23 dem Sonnenstand nachgeführt werden. Um die Stützkräfte zu verringern, kann die Kammer 6 mit einem Gas gefüllt werden, das leichter als Luft ist, beispielsweise Helium oder Wasserstoff, so dass eine Kraftkomponente in Richtung des Pfeils L entsteht.

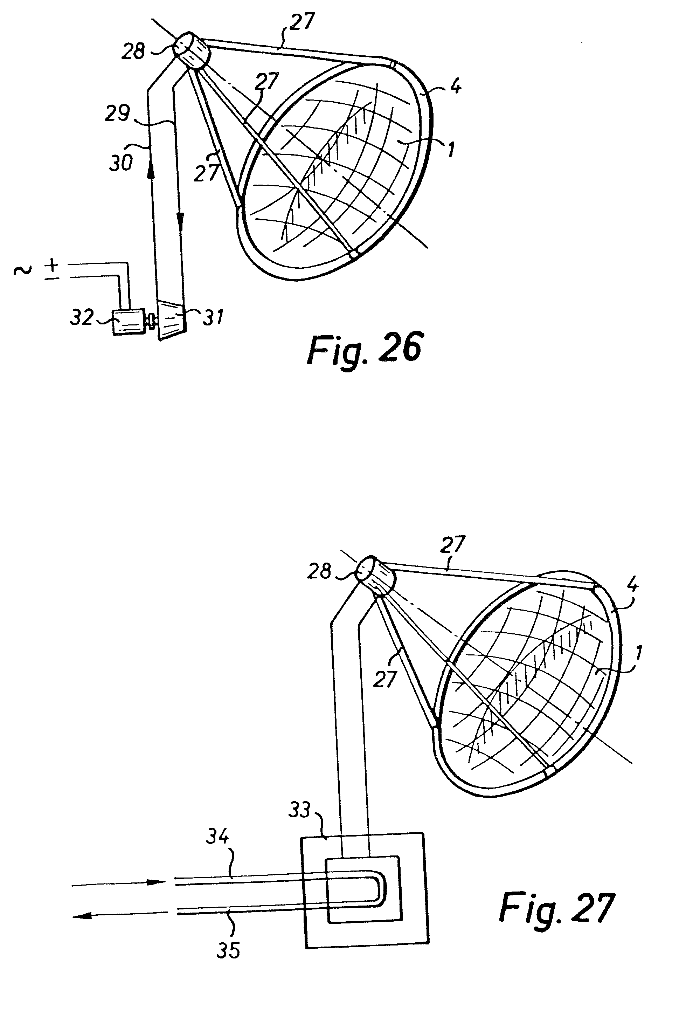

Aus Fig. 26 geht in schematischer Darstellung eine Anlage hervor, bei welcher die Sonnenenergie im Fokus einem von mindestens drei Streben 27 getragenen Erhitzer oder Verdampfer 28 zugeführt wird. Dieser ist über eine Zuleitung 29 und eine Rückleitung 30 mit einer am Boden installierten Turbine 31 verbunden. Durch die am Fokus konzentrierte Wärme wird Dampf erzeugt und der Turbine zugeführt, welche in üblicher Weise einen Generator 32 zur Stromerzeugung treibt. Es ist auch möglich, den Dampferzeuger, die Turbine und den Generator zu einer von den Streben 27 getragenen Einheit im Fokusbereich anzuordnen.

In Fig. 27 ist eine weitere Ausführungsform einer Anlage zur Ausnützung der Sonnenenergie dargestellt. In dem von den Streben 27 getragenen Erhitzer 28 wird ein Gas erhitzt, das über Rohrleitungen zu einer Wärmeaustauschkammer 33 geführt wird. Aus dieser führen Leitungen zu den Verbrauchern. Es kann sich dabei um ein Warmwassertransportsystem handeln, bei welchem die angeschlossenen Verbraucher Wärme in Form von Heisswasser erhalten. Es ist aber auch möglich, ein Gas zu verwenden, bei welchem die Wärme in chemisch gebundene Energie übergeführt wird. Dies geschieht durch eine chemische Umwandlung des Gases in ein anderes, energiereicheres Gasgemisch. Dieses energiereichere Gasgemisch kann in herkömmlichen unterirdischen Gasfernleitungen 35 mit Umgebungstemperatur über weite Entfernungen transportiert werden. Bei den Verbrauchern wird die chemisch gebundene Energie durch Rückwandlung des transportierten Gasgemisches in das Ausgangsgas wieder als Wärme freigesetzt. Dieses Gas wird dann in einer zweiten Leitung 34 zurückgeführt. Die Ueberführung von Gas auf ein höheres Energieniveau durch Zufuhr von Wärme erfolgt beispielsweise in der Form, dass auf etwa 1000°C erhitztes Helium dazu benützt wird, Methan und Wasserdampf umzusetzen in ein Kohlenmonoxid-Wasserstoff-Gemisch. Nach dem Transport des kalten Produktgases findet bei einem Wärmeverbraucher eine Rückwandlung unter Abgabe von Wärme zu Methan und Wasser statt. Ein derartiges Energietransportsystem ist im Zusammenhang mit Kernreaktoren unter der Bezeichnung "Eva-Adam-Energietransportsystem" vorgeschlagen worden (siehe NZZ 4. Juli 1979).

Die Streben 27, auf welchen die Wärmekammer 28 oder dergleichen sitzt, sollen in ihrer Länge etwas veränderlich sein, um eine Korrektur der Einstellung der Lage des Fokus relativ zur Wärmekammer erreichen zu können. Diese Längenänderung kann in an sich bekannter Weise auf mechanischem, elektrischem oder hydraulischem Wege vorgenommen werden.

Vorzugsweise sind drei Streben 27 vorhanden. Je nach der Art der vorgenommenen Längenänderung der Streben 27 lässt sich eine seitliche Verschiebung der Wärmekammer 28 oder aber ein unterschiedlicher Abstand der Wärmekammer 28 vom Kollektor erreichen. Derartige Feinkorrekturen werden vorzugsweise durch eine Datenverarbeitungsanlage gesteuert.

Anstelle eines Hohlreflektors in Form eines Rotationsparaboloides kann als Kollektor auch ein parabolischer Teilzylinder verwendet werden, gemäss den Fig. 12 und 13. Der ebenfalls von einer Folie 1 gebildete Kollektor hat hier

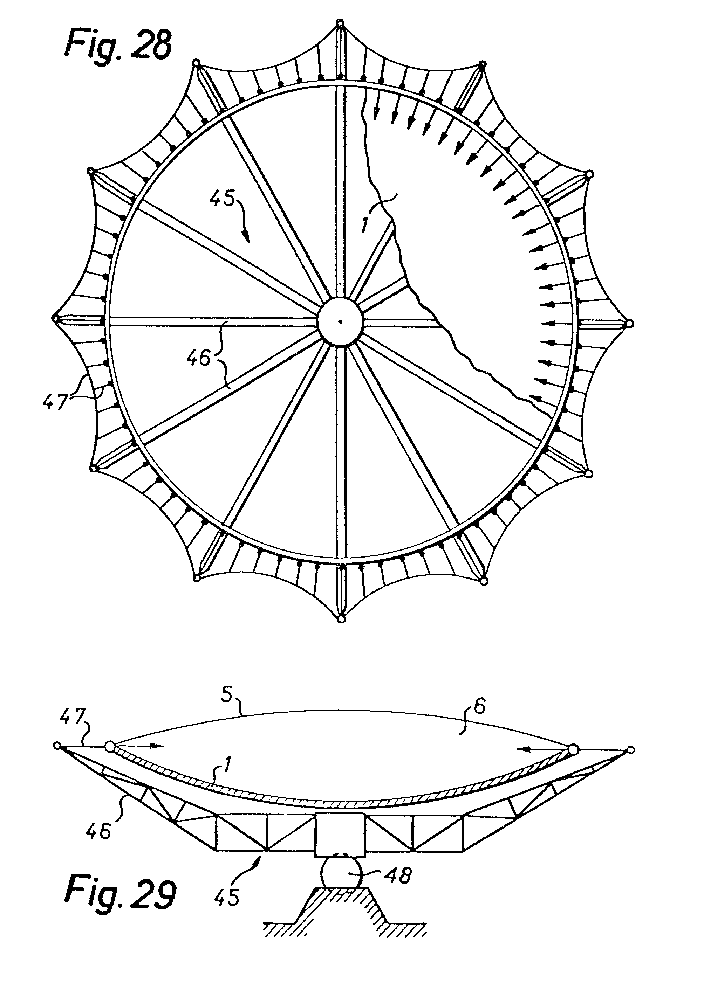

In den Fig. 28 und 29 ist eine Ausführungsform eines erfindungsgemässen Kollektors dargestellt, bei welcher die Membrane 1 an einem Rahmen 45 mit radial verlaufenden Streben 46 an Abspannkabeln 47 aufgehängt und gespannt ist, ähnlich wie dies bei Hängebrücken an sich bekannt ist. Die lichtdurchlässige Folie 5 begrenzt die Kammer 6, in welcher ein Luftüberdruck besteht. Das ganze Gebilde ist in einem Schwenklager 48 abgestützt und wird durch nicht näher dargestellte Organe dem Sonnenstand nachgeführt.

Während bei den bisherigen Beispielen davon ausgegangen wurde, dass die Wärmeauswertungsorgane mit dem Reflektor verbunden werden, ist es indessen auch möglich, die Wärmeauswertungsmittel, welche im Bereich des Fokus anzuordnen sind, vom Reflektor getrennt anzuordnen und beispielsweise auf einem auf dem Boden stehenden Gerüst oder dergleichen zu befestigen, wobei Verstellorgane vorhanden sind, um dem mit dem Sonnenstand wandernden Fokus folgen zu können.

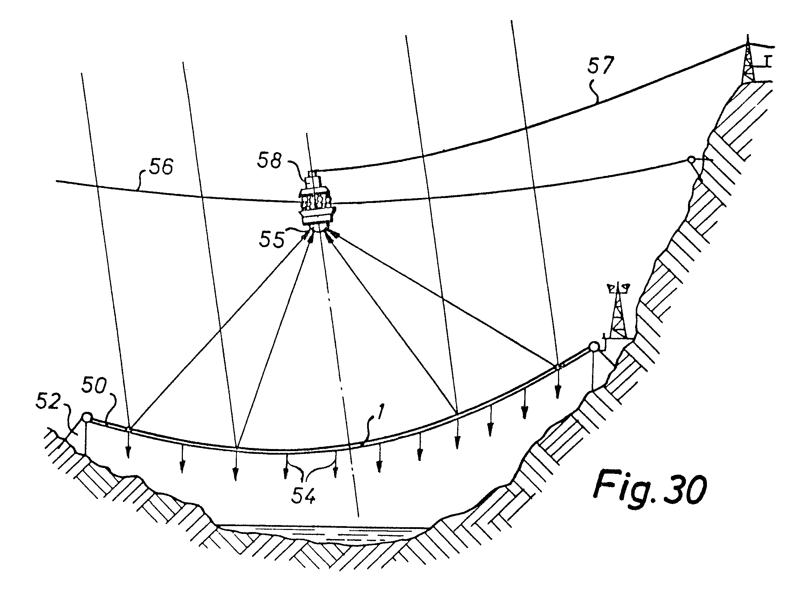

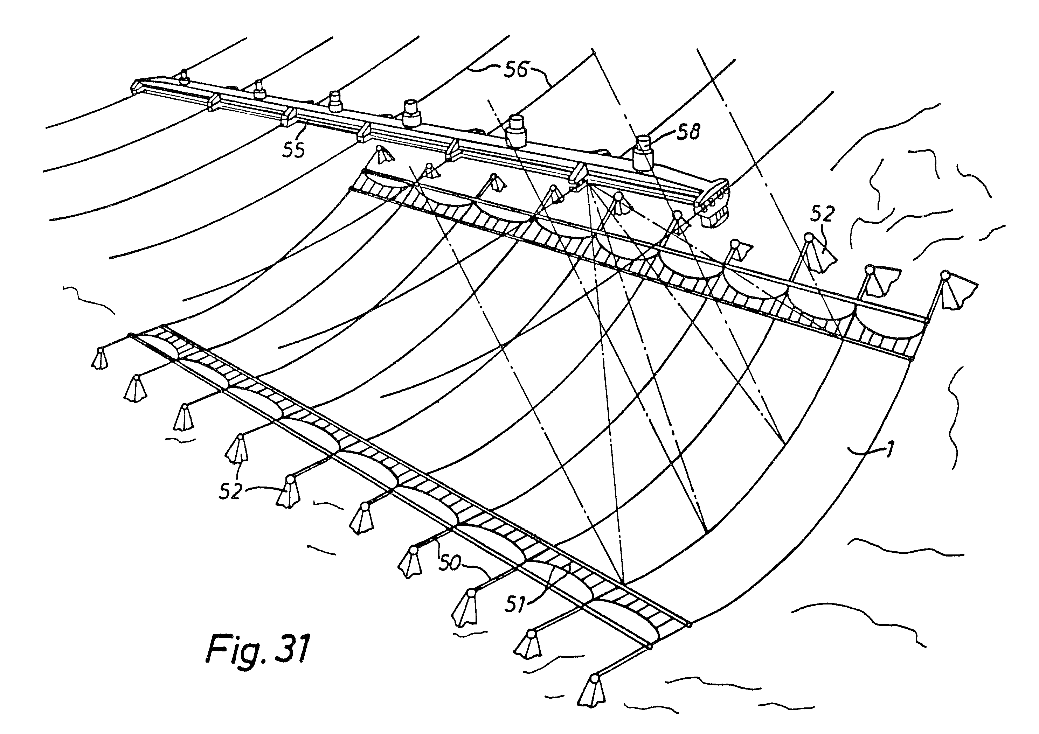

In den Fig. 30 und 31 ist eine Ausführungsform dargestellt, bei welcher der Kollektor ortsfest ist und die Wärmeauswertungsmittel an Kabeln hängend angeordnet sind. Die trogförmige reflektierende Membrane 1 wird von Tragkabeln 50 getragen und Abspannkabeln 51 gespannt. Die Tragkabel 50 sind durch Sockel 52 am Boden starr verankert. Die parabolische Form entsteht hier durch aufgehängte Gewichte 54. Die Wärmeauswertungsorgane 55 im Fokus haben eine längliche Form und werden von Tragseilen 56 getragen. Sie können allenfalls entlang dieser Tragseile 56 durch nicht dargestellte Zugseile verfahrbar sein. Durch unterschiedliche Spannung der Tragseile 56 lässt sich ausserdem die Höhe der Wärme-Auswertungsmittel 55 verändern. Turbinen und Generatoren 58 sitzen unmittelbar über dem rohrförmigen Wärmeauswertungsorgan 55 und geben elektrische Energie über eine Leitung 57 an Verbraucher ab. Eine derartige Anlage eignet sich für Schluchten oder Täler die sich etwa im wesentlichen in Einfallsrichtung der Sonnenstrahlen erstrecken (Ost-West).

Die Merkmale der verschiedenen beschriebenen Ausführungsformen können auch miteinander sinnvoll kombiniert werden; beispielsweise kann die im Zusammenhang mit Fig. 13 erläuterte Einrichtung der Druckveränderung im Innern der Kammer 6 auch bei den anderen Varianten, einschliesslich der Kammer für Vakuum gemäss den Fig.16 und 21 zur Anwendung kommen.

Die vorstehend anhand von verschiedenen Beispielen erläuterte Kollektoranordnung hat neben dem erwähnten Kostenvorteil weitere günstige Eigenschaften. Die Verwendung von dehnbaren Folien hat eine Selbstjustierung der Parabelform zur Folge. Während bei starren Anordnungen jede Krafteinwirkung auf den Kollektor bei Transport, Montage oder Betrieb zu bleibenden Verformungen führte, die durch Neujustierung korrigiert werden müssen, stellt sich die angenäherte Parabelform der reflektierenden Membrane bei der vorliegenden Erfindung jeweils selbst ein. Abweichungen von der Idealform beim Normalbetrieb, wie sie etwa durch wechselnde Windeinwirkung zustande kommen können, werden durch entsprechende Anordnung der Wärmeauswertmittel 28 oder durch deren automatische Feinnachführung in einer gewissen Umgebung des Fokus 7 berücksichtigt.

Im Gegensatz zu den herkömmlichen festen Strukturen erlaubt die erfindungsgemässe Anordnung den problemlosen Schutz gegen Sturmeinwirkungen, indem die Anordnungen belüftet und notfalls abgesenkt werden können, so dass der Winddruck keine Angriffsflächen findet. Dies kann durch Verwendung von Windmessern beim Ueberschreiten eines zulässigen Höchstwertes automatisch erfolgen. Da die Wiederinbetriebnahme, wie oben erläutert, keine umfangreichen Justierarbeiten erfordert, sondern lediglich die Einstellung der richtigen Druckverhältnisse und die Ausrichtung auf den Sonnenstand voraussetzt, kann der Betrieb mit relativ kleinem Aufwand wiederaugenommen werden.

Patentansprüche

1. Sonnenkollektor mit einem parabolischen Reflektorelement, das eine dehnbare, mit einer reflektierenden Schicht versehene Membrane (1) aufweist, die längs ihres Randes in einem Rahmen starr gehalten ist, sowie ein der reflektierenden Membrane gegenüberliegendes Wandelement (5;10), welche miteinander eine druckdichte Kammer (6) für die hohlparabolische Verformung der reflektierenden Membran (1) bilden, in deren Fokus Wärmeauswertungsorgane (28) angeordnet sind, dadurch gekennzeichnet, dass die reflektierende Membran (1) und das Wandelement (5;10) unterschiedlich aufgebaut sind, derart, dass die Krümmung der reflektierenden Membran (1) grösser ist als diejenige des Wandelements (5; 10).

2. Sonnenkollektor nach Anspruch 1, dadurch gekennzeichnet, dass der Quotient $\alpha$, gebildet aus zulässiger Spannung ($\sigma_{zul}$) dividiert durch das Elastizitätsmodul (E) für das Material der reflektierenden Membran (1) grösser ist als für dasjenige des Wandelements (5;10).

3. Sonnenkollektor nach Anspruch 1 oder Anspruch 2, wobei das Wandelement eine lichtdurchlässige Membran (5) aufweist, die auf der Lichteinfallsseite der reflektierenden Membrane (1) angeordnet ist und wobei im Innern der dazwischen gebildeten Kammer (6) Ueberdruck erzeugt ist, dadurch gekennzeichnet, dass die lichtdurchlässige Membran (5) aus einer Kunststofffolie (60) und einem Tragnetz (61) zusammengesetzt ist.

4. Sonnenkollektor nach Anspruch 1 oder Anspruch 2, dadurch gekennzeichnet, dass die reflektierende Membrane (1) aus einer Kunststofffolie (60) und einem Tragnetz (61) zusammengesetzt ist.

5. Sonnenkollektor nach Anspruch 1 oder Anspruch 2, dadurch gekennzeichnet, dass die reflektierende Membrane aus homogenem, dehnbarem Material, wie Gummi oder weichem Vinylkunststoff besteht.

-1-

6. Sonnenkollektor nach Anspruch 3 und Anspruch 4, dadurch gekennzeichnet, dass das Tragnetz (61) der reflektierenden Membran (1) aus einem Material besteht, welches einen grösseren Quotienten ($\mathfrak{R}$), gebildet aus zulässiger Spannung ($\delta_{zul}$) dividiert durch das Elastizitätsmodul (E) bestitzt, als dasjenige des Tragnetzes (61) der lichtdurchlässigen Membrane (5).

7. Sonnenkollektor nach Anspruch 3 oder Anspruch 4, dadurch gekennzeichnet, dass das Tragnetz (61) ein zentrales Polygon aufweist, an dessen Seiten sich in Dreiecksanordnung ausgebildete Maschen anschliessen.

8. Sonnenkollektor nach Anspruch 3 oder Anspruch 4, dadurch gekennzeichnet, dass das Tragnetz aus strahlförmig zwischen Befestigungspunkten am Membranumfang verlaufenden Elementen aufgebaut ist.

9. Sonnenkollektor nach Anspruch 3 oder Anspruch 4, dadurch gekennzeichnet, dass das Tragnetz aus einer Vielzahl identischer Polygone aufgebaut ist.

10. Sonnenkollektor nach einem der Ansprüche 1 bis 9, dadurch gekennzeichnet, dass er die Form eines Rotationsparaboloids hat und der Rahmen (4) zumindestens ein torusförmiges, starres Element zur Halterung der Membrane (1) bzw. des Wandelements (5;10) aufweist.

11. Sonnenkollektor nach einem der Ansprüche 3 bis 10, dadurch gekennzeichnet, dass die reflektierende Membrane und die lichtdurchlässige Membrane derart ausgebildet sind, dass sich der Brennpunkt und die Wärmeauswertungsorgane im Kammerinnern befinden.

12. Sonnenkollektor nach Anspruch 10 und Anspruch 11, dadurch gekennzeichnet, dass die Wärmeauswertungsorgane mittels Streben (12) am torusförmigen Element (4) von der reflektierenden Membrane (1) weg aus der Ebene des torusförmigen Elements versetzt angeordnet sind, wobei sich die lichtdurchlässige Membrane (5) in einem Bogen zwischen dem torusförmigen Element (4) und einer mit den Wärmeauswertungsorganen (28) verbundenen, zentralen Halterung (70) erstreckt und derart ausgebildet ist, dass seine, in Lichteinfallsrichtung vor der reflektierenden Membrane liegenden Bereiche (71) im wesentlichen senkrecht zur Lichteinfallsrichtung stehen (Fig. 12).

13. Sonnenkollektor nach Anspruch 10 und Anspruch 11, dadurch gekennzeichnet, dass die reflektierende Membrane (1) aus einem Material besteht, welches die Verformung in einem Ausmass erlaubt, dass die Brennweite (F) und die maximale Auslenkung (Ymax) der reflektierenden Membrane (1) im wesentlichen gleich gross sind und dadurch gekennzeichnet, dass die Wärmeauswertungsorgane (28) mit Spannkabeln (72) am torusförmigen Element (4) zentral aufgehängt sind (Fig. 14,15).

14. Sonnenkollektor nach Anspruch 13, dadurch gekennzeichnet, dass die Spannkabeln (72) mit dem Tragnetz stellenweise verbunden sind (Fig. 15).

15. Sonnenkollektor nach einem der Ansprüche 3 bis 13, dadurch gekennzeichnet, dass die Kammer ein Gas enthält, das leichter ist als Luft.

16. Sonnenkollektor nach einem der Ansprüche 1,2,4,5, dadurch gekennzeichnet, dass das Wandelement (10) auf der der Lichteinfallsseite abgewandten Seite der reflektierenden Membrane (1) angeordnet ist und im Innern der dazwischen gebildeten Kammer (6) Unterdruck erzeugt wird.

17. Sonnenkollektor nach Anspruch 16, dadurch gekennzeichnet, dass er die Form eines Rotationsparaboloids hat und der Rahmen zwei torusförmige, miteinander verbundene, starre Elemente (75,76) aufweist, welche koaxial und in Achsrichtung beabstandet angeordnet sind, wobei im ersten (75) die reflektierende Membrane und im zweiten (76) das Wandelement (10) gehaltert ist und wobei zwischen den beiden torusförmigen Elementen (75,76) die Kammer (6) von einer druckdichten Aussenhaut (77) begrenzt ist (Fig. 17,19).

18. Sonnenkollektor nach Anspruch 17, dadurch gekennzeichnet, dass sich innerhalb des zweiten

-3-

torusförmigen Elements (76) netzartig eine Tragkabelanordnung (78) erstreckt, welche im Zentrum mit einem Traglager (79) verbunden ist, welches in mindestens einem Freiheitsgrad bewegbar auf einer Stütze (80) angeordnet ist und dass das Wandelement (10) durch eine ausserhalb der Tragkabelanordnung (78) angebrachte Kunststofffolie gebildet ist (Fig. 17,19).

19. Sonnenkollektor nach Anspruch 18, dadurch gekennzeichnet, dass die reflektierende Membrane (1) aus einem Material besteht, welches die Verformung in einem Ausmass erlaubt, dass die Brennweite (F) und die maximale Auslenkung (Ymax) der reflektierenden Membrane (1) im wesentlichen gleich gross sind und, dadurch gekennzeichnet, dass die Wärmeauswertungsorgane (28) mit Spannkabeln (72) am ersten torusförmigen Element (75) zentral aufgehängt sind (Fig. 19).

20. Sonnenkollektor nach einem der Ansprüche 1-12,16-18, wobei die Wärmeauswertungsorgane (28) mittels Streben (12) mit dem Rahmen (4) bzw. mit einem oder beiden torusförmigen Elementen (75,76) verbunden sind, dadurch gekennzeichnet, dass mindestens ein Teil der Streben (12) zur Korrektur der Brennpunkt-Einstellung längenveränderlich sind.

21. Sonnenkollektor nach einem der vorhergehenden Ansprüche, dadurch gekennzeichnet, dass im Brennpunkt ein Wärmefühler (50), eine von diesem beeinflusste Steuereinrichtung (52) und Mittel zur Aenderung des Druckes bzw. Unterdruckes in der Kammer (6) vorhanden sind.

22. Sonnenkollektor nach einem der Ansprüche 1 bis 17, dadurch gekennzeichnet, dass der Rahmen an längenveränderlichen Stützen (16), insbesondere Teleskopstützen, befestigt oder dass der Kollektor an Kabeln (19) mit veränderlicher wirksamer Länge aufgehängt ist und Mittel (20) vorhanden sind zum Nachführen des Reflektors nach dem Sonnenstand.

23. Sonnenkollektor nach einem der Ansprüche 3-10, dadurch gekennzeichnet, dass eine Tragstruktur (45) mit radial verlaufenden Streben (46) vorgesehen ist, an dessen Enden Abspannkabel (47) zum Spannen
der reflektierenden Membrane (1) vorhanden sind
(Fig. 28,29).

24. Sonnenkollektor nach Anspruch 1 oder Anspruch 2, dadurch gekennzeichnet, dass er in Form eines
parabolischen Teilzylinders ausgebildet ist und dass sich
im Fokus ein parallel zur Kollektorlängsachse verlaufendes
Rohr (38) befindet (Fig. 20,21).

25. Sonnenkollektor nach einem der Ansprüche
1-23, dadurch gekennzeichnet, dass die Wärmeauswertungsorgane (28) einen Dampferzeuger aufweisen, der über Rohrleitungen (29,30) mit einer am Boden angeordneten Turbine (31) mit Generator (32) verbunden ist.

26. Sonnenkollektor nach einem der Ansprüche
1-23, dadurch gekennzeichnet, dass die Wärmeauswertungsorgane (28) im Brennpunkt einen Dampferzeuger samt Turbine und Generator aufweisen.

27. Sonnenkollektor nach einem der Ansprüche
1-23, dadurch gekennzeichnet, dass die Wärmeauswertungsorgane (28) im Brennpunkt eine Gasumwandlungsanlage aufweisen, in welcher ein Gas aus einem ersten Zustand in
einen zweiten, energiereicheren Zustand überführt wird.

28. Sonnenkollektor nach Anspruch 1 oder Anspruch 2, dadurch gekennzeichnet, dass die Wärmeauswertungsorgane (28) von einem vom Reflektorelement getrennten, auf dem Boden stehenden Gerüst getragen sind.

29. Sonnenkollektor mit einem parabolischen
Reflektorelement, das eine dehnbare, mit einer reflektierenden Schicht versehene Membrane aufweist, die längs
ihres Randes starr gehalten ist, dadurch gekennzeichnet,
dass zur Flächenbelastung der Folie Gewichte (54) vorhanden sind, so dass sie eine mindestens angenähert parabolische Verformung annimmt, wobei im Fokus Wärmeauswertungsorgane vorhanden sind.

30. Sonnenkollektor nach Anspruch 28, dadurch
gekennzeichnet, dass der Kollektor ortsfest ist und mindestens die Wärmeauswertungsorgane (55) an Kabeln
hängend ausgebildet sind (Fig. 30, 31).

**Fig. 1**

**Fig. 2**

Fig. 3

Fig. 4

Fig. 5

14/2

0025834

0025834

**Fig.6**

**Fig. 7**

**Fig.8**

**Fig.9**

Fig.10

Fig. 11

Fig.12

Fig. 13

Fig.14

Fig.15

$$F = Y_{max} \pm \Delta Y$$

Fig.19

0025834

*Fig. 16*

0025834

**Fig.17**

**Fig.17A**

**Fig.18**

Fig. 20

Fig. 21

**Fig. 22**

**Fig. 23**

**Fig. 24**

**Fig. 25**

*Fig. 26*

*Fig. 27*

Fig. 28

45

1

46

47

Fig. 29

5

6

47

1

46

45

48

Fig.30

Fig. 31

55
56
58
52
52
50
51
1

44/44

0025834